# EUROPEAN PATENT APPLICATION

(11) **EP 3 457 181 A1**
(43) Date of publication of application: **20.03.2019**
(21) Application number: 17795885.7
(22) Date of filing: 14.04.2017
(51) Int. Cl.: G01T 1/20, G01T 7/00

(54) **RADIATION DETECTOR**

(30) Priority: 11.05.2016 JP 2016095096
(71) Applicant: Canon Electron Tubes & Devices Co., Ltd., Otawara-shi, Tochigi (JP)
(72) Inventor: SHIMBA, Yuichi, Otawara-shi Tochigi 324-8550 (JP)
(74) Representative: Henkel, Breuer & Partner
(86) International application number: PCT/JP2017/015236
(87) International publication number: WO 2017/195524

(57) **Abstract**

According to an embodiment of the present invention, a radiation detector is provided with: an array substrate having a plurality of photoelectric conversion elements; a scintillator, which is provided on the photoelectric conversion elements, and which converts inputted radiation into fluorescence; a circuit board that is provided on the array substrate side that is opposite to the side on which the scintillator is provided; a flexible printed board that electrically connects to each other a plurality of wiring lines that are provided on the array substrate, and a plurality of wiring lines that are provided on the circuit board; and a semiconductor element that is provided on the flexible printed board such that the semiconductor element is positioned below the scintillator when viewed from the radiation input direction.

## Description

### [Technical Field]

An embodiment of the invention relates to a radiation detector.

### [Background Art]

There is an X-ray detector as a kind of a radiation detector. The X-ray detector is provided with a scintillator converting the incident X-ray to fluorescence, an array substrate provided with multiple photoelectric conversion parts which convert the fluorescence to a signal charge, a circuit board provided with a reading circuit and an amplification/conversion circuit, and a flexible printed board electrically connecting the multiple photoelectric conversion parts to the reading circuit and the amplification/conversion circuit or the like.

Recently, since thinning and weight saving of the X-ray detector have been progressed, it becomes possible to carry the X-ray detector, and replace a cartridge incorporating a film medium for imaging an X-ray image with the X-ray detector.

Here, the circuit board is provided on an opposite side to an incident side of the X-ray of the array substrate. One end portion of the flexible printed board is connected to a peripheral region of the array substrate. Other end portion of the flexible printed board is connected to a peripheral region of the circuit board. For that reason, the flexible printed board is provided near the periphery of the array substrate and the circuit board.

A semiconductor element may be mounted on such a flexible printed board.

However, because the flexible printed board is provided near the periphery of the array substrate and the circuit board, if the semiconductor element is mounted simply, the X-ray may be caused to be substantially directly incident on the semiconductor element. If the X-ray is incident substantially directly on the semiconductor element, there is a fear that the semiconductor element breaks down.

In this case, if a shielding plate made of lead or copper or the like is provided on the incident side of the X-ray of the semiconductor element, it can reduce an X-ray dose of the incident X-ray to the semiconductor element. However, if the shielding plate is provided, it results in complication of the structure, and increasing a thickness dimension and a weight of the X-ray detector. For that reason, there is a possibility that the thickness and weight of the X-ray detector cannot be reduced.

Then, it has been desired to develop a technique which can suppress the X-ray dose of the X-ray incident on the semiconductor element provided on the flexible printed board without providing the shielding plate.

### [Prior Art Document]

### [Patent Document]

[Patent Document 1] JP 2003-14862 A (Kokai)
[Patent Document 2] JP 2002-116261 A (Kokai)

### [Summary of Invention]

### [Problem to be Solved by Invention]

The problem to be solved by the invention is to provide a radiation detector which can suppress an X-ray dose of an X-ray incident on a semiconductor element provided on a flexible printed board.

### [Means for Solving Problem]

According to one embodiment of the invention, a radiation detector includes an array substrate (2) including a plurality of photoelectric conversion elements (2b1), a scintillator (5) provided on the plurality of photoelectric conversion elements (2b), the scintillator (5) converting an incident radiation to a fluorescence, a circuit board (3) provided on a side of the array substrate (2) opposite to a side on which the scintillator (5) is provided, a flexible printed board (2e1, 2e2) electrically connecting a plurality of wirings provided on the array substrate (2) and a plurality of wirings provided on the circuit board (3), and when viewing in an incident direction of the radiation, a semiconductor element (3aa1, 3b1) provided on the flexible printed board (2e1, 2e2), the semiconductor element (3aa1, 3b1) being positioned below the scintillator.

### [Brief Description of Drawings]

FIG. 1 is a schematic cross-sectional view for illustrating an X-ray detector 1 according to the embodiment.
FIG. 2 is an enlarged schematic view of a portion A in FIG. 1.
FIG. 3 is a schematic perspective view for illustrating a detection part 10.
FIG. 4 is a circuit diagram of an array substrate 2.
FIG. 5 is a block diagram of the detection part 10.
FIGS. 6A, 6B are schematic views for illustrating a flexible printed board 2e1 mounted with a semiconductor element 3aa1.
FIGS. 7A, 7B are schematic views for illustrating a flexible printed board 2e2 mounted with a semiconductor element 3b1.
FIGS. 8A, 8B are schematic cross-sectional views for illustrating an arrangement of a semiconductor element according to a comparative example.

### [Embodiments of Invention]

Embodiments will now be described with reference to the drawings. In the drawings, similar components are marked with like reference numerals, and a detailed description is omitted as appropriate.

The radiation detector according to the embodiment can be applied to various radiations such as a γ-ray other than an X-ray. Here, the case of the X-ray as a representative of radiations is described as one example. Therefore, the radiation detector can be also applied to other radiation by replacing "X-ray" of the following embodiments with "other radiation".

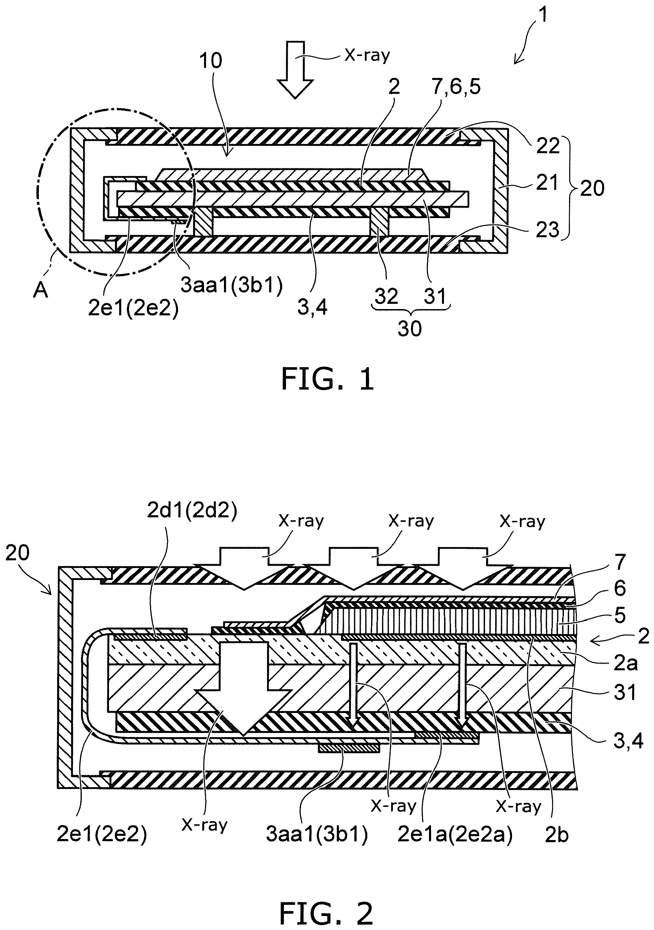

FIG. 1 is a schematic cross-sectional view for illustrating an X-ray detector 1 according to the embodiment.

FIG. 2 is an enlarged schematic view of a portion A in FIG. 1.

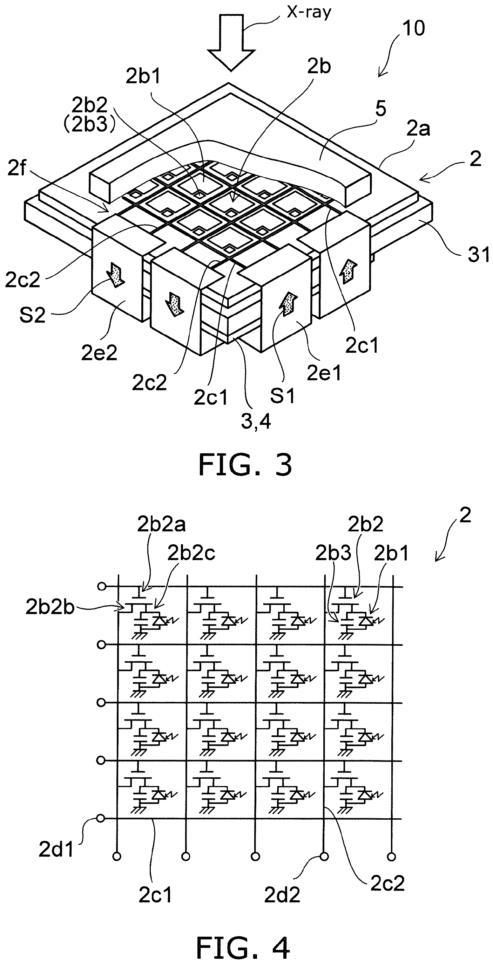

FIG. 3 is a schematic perspective view for illustrating a detection part 10.

In order to avoid complexity, in FIG. 3, a reflection layer 6 and a moistureproof body 7 are omitted.

FIG. 4 is a circuit diagram of an array substrate 2.

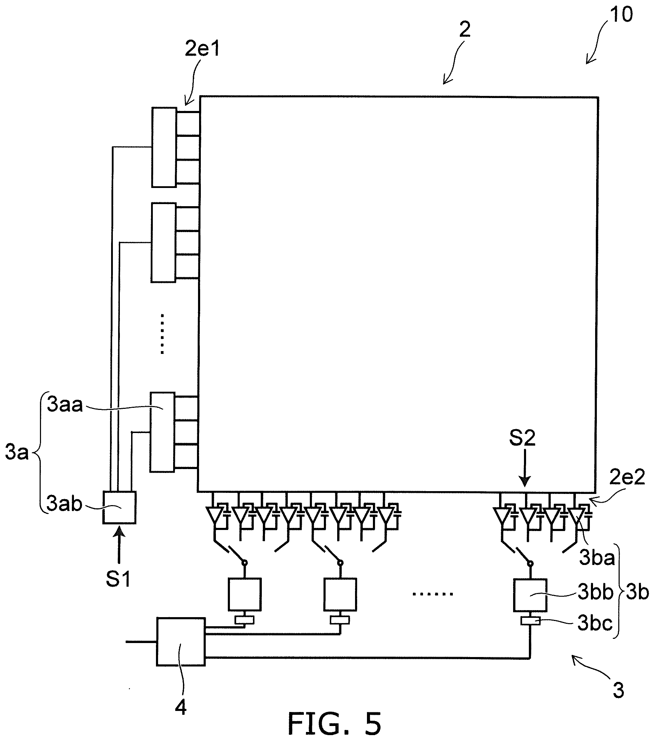

FIG. 5 is a block diagram of the detection part 10.

The X-ray detector 1 which is a radiation detector is an X-ray plane sensor detecting an X-ray image which is a radiation image. The X-ray detector 1 can be used for general medical care or the like, for example. However, the use of the X-ray detector 1 is not limited to general medical care.

As shown in FIG. 1 to FIG. 5, the X-ray detector 1 is provided with the detection part 10, a housing 20, and a support 30.

The detection part 10 is provided with an array substrate, a circuit board 3, an image composing part 4, a scintillator 5, the reflection layer 6, and the moistureproof body 7.

The detection part 10 is provided inside the housing 20.

The array substrate 2 converts fluorescence (visible light) converted from the X-ray by the scintillator 5 converts a signal charge.

The array substrate 2 includes a substrate 2a, a photoelectric conversion part 2b, a control line (or gate line) 2c1, a data line (or signal line) 2c2, and a protection layer 2f or the like.

The number of the photoelectric conversion part 2b, the control line 2c1, and the data line 2c2 or the like is not limited to the illustration.

The substrate 2a is plate-shaped, and is formed of a light transmissive material such as a non-alkali glass.

The photoelectric conversion part 2b is provided multiply on one surface of the substrate 2a.

The photoelectric conversion part 2b is rectangle-shaped, and is provided in a region drawn by the control line 2c1 and the data line 2c2. The multiple photoelectric conversion parts 2b are arranged in a matrix configuration. One photoelectric conversion part 2b corresponds to one picture element (pixel).

Each of the multiple photoelectric conversion parts 2b is provided with a photoelectric conversion element 2b1, and a thin film transistor (TFT) 2b2 which is a switching element.

As shown in FIG. 4, a storage capacitor 2b3 which stores the signal charge converted in the photoelectric conversion element 2b1 can be provided. The storage capacitor 2b3 is, for example, rectangular flat plate-shaped, and can be provided under the respective thin film transistors 2b2. However, depending on a capacity of the photoelectric conversion element 2b1, the photoelectric conversion element 2b1 can serve as the storage capacitor 2b3.

The photoelectric conversion element 2b1 can be, for example, a photodiode or the like.

The thin film transistor 2b2 performs switching of storing and release of a charge to the storage capacitor 2b3. The thin film transistor 2b2 can include a semiconductor material such as amorphous silicon (a-Si) and polysilicon (P-Si). The thin film transistor 2b2 includes a gate electrode 2b2a, a source electrode 2b2b and a drain electrode 2b2c. The gate electrode 2b2a of the thin film transistor 2b2 is electrically connected to the corresponding control line 2c1. The source electrode 2b2b of the thin film transistor 2b2 is electrically connected to the corresponding data line 2c2. The drain electrode 2b2c of the thin film transistor 2b2 is electrically connected to the corresponding photoelectric conversion element 2b1 and the storage capacitor 2b3. An anode side of the photoelectric conversion element 2b1 and the storage capacitor 2b3 are connected to the ground.

The control line 2c1 is provided multiply to be parallel to each other with a prescribed spacing. The control lines 2c1 extend, for example, in a row direction.

One control line 2c1 is electrically connected to one of multiple wiring pads 2d1 provided near the periphery of the substrate 2a. One of multiple wirings provided on a flexible printed board 2e1 is electrically connected to one wiring pad 2d1. Other ends of the multiple wirings provided on the flexible printed board 2e1 are electrically connected to a reading circuit 3a provided on the circuit board 3, respectively.

The data line 2c2 is provided multiply to be parallel to each other with a prescribed spacing. The data lines 2c2 extend, for example, in a column direction orthogonal to the row direction.

One data line 2c2 is electrically connected to one of multiple wiring pads 2d2 provided near the periphery of the substrate 2a. One of multiple wirings provided on a flexible printed board 2e2 is electrically connected to one wiring pad 2d2. Other ends of the multiple wirings provided on the flexible print board 2e2 are electrically connected to an amplification/conversion circuit 3b provided on the circuit board 3, respectively.

The control line 2c1 and the data line 2c2 can be formed based on, for example, a low resistance metal such as aluminum and chromium or the like.

A protection layer 2f covers the photoelectric conversion part 2b, the control line 2c1, and the data line 2c2.

The protection layer 2f includes, for example, at least one of an oxide insulating material, a nitride insulating material, an oxynitride insulating material, or a resin material.

The circuit board 3 is provided on a side of the array substrate 2 opposite to a side on which the scintillator 5 is provided.

The circuit board 3 is provided with the reading circuit 3a, and the amplification/conversion circuit 3b.

The reading circuit 3a switches the thin film transistor 2b2 between the on state and the off state.

As shown in FIG. 5, the reading circuit 3a includes multiple gate drivers 3aa and a row selection circuit 3ab.

A control signal S1 is input to the row selection circuit 3ab from the image composing part 4 or the like. The row selection circuit 3ab inputs the control signal S1 to the corresponding gate driver 3aa in accordance with a scanning direction of the X-ray image.

The gate driver 3aa inputs the control signal S1 to the corresponding control line 2c1.

For example, the reading circuit 3a sequentially inputs the control signal S1 for each control line 2c1 via the flexible printed board 2e1 and the control line 2c1. The thin film transistor 2b2 turns on by the control signal S1 input to the control line 2c1, and can receive the signal charge (image data signal S2) from the photoelectric conversion element 2b1.

The amplification/conversion circuit 3b includes multiple integral amplifiers 3ba, multiple parallel-to-serial conversion circuits 3bb, and multiple analogue-digital conversion circuits 3bc.

The integral amplifier 3ba is electrically connected to the data line 2c2.

The parallel-to-serial conversion circuit 3bb is electrically connected to the integral amplifier 3ba via a selector switch.

The analogue-digital conversion circuit 3bc is electrically connected to the parallel-to-serial conversion circuit 3bb.

The integral amplifier 3ba sequentially receives the image data signal S2 from the photoelectric conversion part 2b.

The integral amplifier 3ba integrates a current flowing within a certain period of time, and outputs the voltage corresponding to its integrated value to the parallel-to-serial conversion circuit 3bb. In this way, a value of the current (charge amount) flowing in the data line 2c2 within a certain period of time is possible to be converted to a voltage value.

That is, the integral amplifier 3ba converts image data information corresponding to an intensity distribution of the fluorescence generated in the scintillator 5 to potential information.

The parallel-to-serial conversion circuit 3bb converts the image data signal S2 converted to the potential information sequentially converts to a DC signal.

The analogue-digital conversion circuit 3bc sequentially converts the image data signal S2 converted to the DC signal to a digital signal.

The image composing part 4 is electrically connected to the analogue-digital conversion circuit 3bc provided on the circuit board 3. As illustrated in FIG. 3, the image composing part 4 can be integrated with the circuit board 3. The image composing part 4 and the circuit board 3 may be provided separately, and the image composing part 4 and the circuit board 3 may be electrically connected via a wiring.

The image composing part 4 configures the X-ray image. The image composing part 4 creates the X-ray image signal on the basis of the image data signal S2 converted to the digital signal by the analogue-digital conversion circuit 3bc. The created X-ray image signal is output toward an external equipment from the image composing part 4.

The scintillator 5 is provided on the multiple photoelectric conversion elements 2b1, and converts the incident X-ray to the visible light, namely the fluorescence. The scintillator 5 is provided to cover a region (effective pixel region) where the multiple photoelectric conversion parts 2b on the substrate 2a are provided.

The scintillator 5 can be formed based on, for example, cesium iodide (CsI):thallium (TI), or sodium iodide (NaI):thallium (TI) or the like. In this case, if the scintillator 5 is formed by using a vacuum deposition method or the like, the scintillator 5 made of multiple columnar crystal aggregations is formed.

The scintillator 5 can be also formed based on, for example, gadolinium oxysulfide (Gd₂O₂S) or the like. In this case, grooves in a matrix configuration can be formed so that the square pillar-shaped scintillator 5 is provided for every multiple photoelectric conversion elements 2b.

As shown in FIG. 2, the reflection layer 6 is provided so as to cover a surface side (an incident surface side of the X-ray) of the scintillator 5. The reflection layer 6 is provided so as to increase a utilization efficiency of the fluorescence and improve sensitivity characteristics. The reflection layer 6 can be, for example, formed by coating a resin including light scattering particles such as titanium oxide (TiO₂) or the like.

As shown in FIG. 2, the moistureproof body 7 is provided so as to cover the reflection layer 6 and the scintillator 5. The moistureproof body 7 is provided in order to suppress the characteristics of the scintillator 5 and the characteristics of the reflection layer 6 from being degraded due to water vapor included in air.

The moistureproof body 7 is hat-shaped, and for example, can be formed of an aluminum alloy or the like.

The housing 20 includes a cover part 21, an incident window 22, and a base 23.

The cover part 21 is box-shaped, and has openings on an incident side of the X-ray and on an opposite side to the incident side of the X-ray.

Considering weight saving, the cover part 21 can be formed, for example, of an aluminum alloy or the like. The cover part 21 can be also formed by using, for example, a polyphenylene sulfide resin, a polycarbonate resin, a carbon-fiber-reinforced plastic (CFRP) or the like.

The incident window 22 is plate-shaped, and is provided to close the opening on the incident side of the X-ray. The incident window 22 transmits the X-ray. The incident window 22 is formed of a material having a low X-ray absorption rate. The incident window 22 can be formed, for example, of the carbon-fiber-reinforced plastic or the like.

The base 23 is plate-shaped, and is provided to close the opening on the opposite side to the incident side of the X-ray. A material of the base 23 is not limited particularly as long as having a certain degree of rigidity. The material of the base 23 can be, for example, the same as the material of the cover part 21.

The support 30 includes a supporting plate 31 and a supporting body 32.

The supporting plate 31 is plate-shaped, and is provided inside the housing 20. The array substrate 2 and the scintillator 5 are provided on a plane of the supporting plate 21 on the incident window 22 side. The circuit board 3 and the image composing part 4 are provided on a plane of the supporting plate 31 on the base 23 side.

A material of the supporting plate 31 is not limited particularly as long as having a certain degree of rigidity. However, considering weight saving of the X-ray detector 1, the material of the supporting plate 31 is favorable to be a material having small specific gravity. The material of the supporting plate 31 can be, for example, a light metal such as an aluminum alloy or the like, a resin such as a carbon-fiber-reinforced plastic or the like.

The supporting body 32 is columnar-shaped, and is provided inside the housing 20. The supporting body 32 can be provided between the supporting plate 31 and the base 23. Fixing of the supporting body 32 and the supporting plate 31 and fixing of the supporting body 32 and the base 23 can be made, for example, by using a fastening member such as a screw. A material of the supporting body 32 is not limited particularly as long as having a certain degree of rigidity. The material of the supporting body 32 can be, for example, a light metal such as an aluminum alloy or the like, a resin such as a carbon-fiber-reinforced plastic or the like.

The form, the arrangement position, the number or the like of the supporting body 32 are not limited to the illustration. For example, the supporting body 32 can be plate-shaped, and can be also provided so as to protrude from an inside surface of the cover part 21. That is, the supporting body 32 is sufficient to be something which can support the supporting plate 31 inside the housing 20.

Here, the number of the control lines 2c1 provided on the array substrate 2 is large, and the pitch dimension is also short. For that reason, if the pitch dimension of the wiring provided on the circuit board 3 is matched to the pitch dimension of the control line 2c1, it becomes difficult to mount the semiconductor element.

The number of the data line 2c2 provided on the array substrate 2 is also large, and the pitch dimension is also short. For that reason, if the pitch dimension of the wiring provided on the circuit board 3 is matched to the pitch dimension of the data line 2c2, it becomes difficult to mount the semiconductor element.

Then, the pitch dimension of the wiring provided on the circuit board 3 is lengthened, and on the flexible printed boards 2e1, 2e2, the pitch dimension of the wiring on the array substrate 2 and the pitch dimension of the wiring on the circuit board 3 are matched.

The gate driver 3aa previously described can be provided in one semiconductor element 3aa as an integrated circuit. The amplification/conversion circuit 3b can be also provided on one semiconductor element 3b1 as an integrated circuit. Although the semiconductor elements 3aa1, 3b1 can be also mounted on the circuit board 3, if they are mounted on the flexible printed boards 2e1, 2e2, the number of wirings connected to the circuit board 3 provided on the flexible printed boards 2e1, 2e2 can be small.

For that reason, the semiconductor elements 3aa1, 3b1 may be mounted on the flexible printed boards 2e1, 2e2.

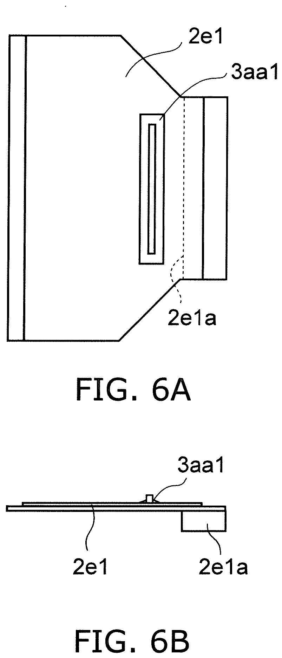

FIGS. 6A, 6B are schematic views for illustrating the flexible printed board 2e1 having the semiconductor element 3aa1 mounted.

As shown in FIGS. 6A, 6B, one end portion of the flexible printed board 2e1 is electrically connected to the wiring pad 2d1 provided near the periphery of the array substrate 2. Other end portion of the flexible printed board 2e1 is electrically connected to the wiring of the circuit board 3 via a connector 2e1a.

The semiconductor element 3aa1 is mounted on one plane of the flexible printed board 2e1.

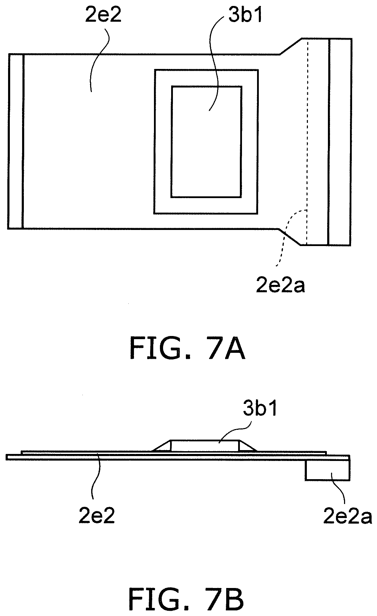

FIGS. 7A, 7B are schematic views for illustrating the flexible printed board 2e2 having the semiconductor element 3b1 mounted.

As shown in FIGS. 7A, 7B, one end portion of the flexible printed board 2e2 is electrically connected to the wiring pad 2d2 provided near the periphery of the array substrate 2. Other end portion of the flexible printed board 2e2 is electrically connected to the wiring of the circuit board 3 via a connector 2e2a.

The semiconductor element 3b1 is mounted on one plane of the flexible printed board 2e2.

If the semiconductor elements 3aa1, 3b1 are mounted on the flexible printed boards 2e1, 2e2, a manufacturing cost can be reduced greatly.

However, because the flexible printed boards 2e1, 2e2 are provided near the periphery of the array substrate and the circuit board 3, if the semiconductor elements 3aa1, 3b1 are mounted simply on the flexible printed boards 2e1, 2e2, there is a fear that the X-ray is incident on the semiconductor elements 3aa1, 3b1 almost directly. If the X-ray is incident on the semiconductor elements 3aa1, 3b1 almost directly, there is a fear that the semiconductor elements 3aa1, 3b1 break down.

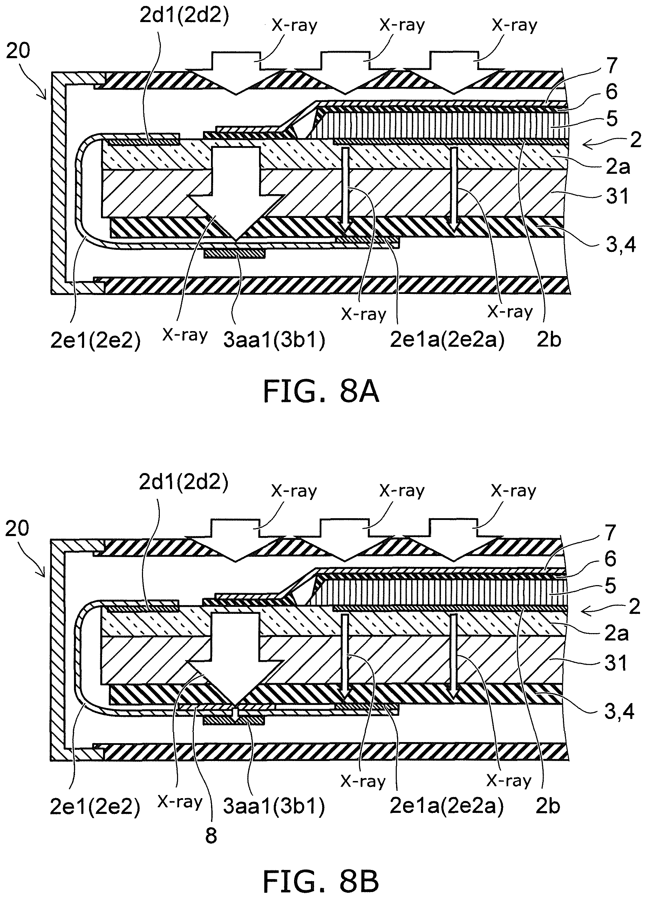

FIGS. 8A, 8B are schematic cross-sectional views for illustrating semiconductor elements according to a comparative example.

As shown in FIG. 8A, the flexible printed boards 2e1, 2e2 are provided near the periphery of the array substrate 2 and the circuit board 3.

Here, the circuit board 3 is formed of a resin mainly. The supporting plate 31 is formed of a light metal such as an aluminum alloy or a resin for weight saving. The substrate 2a is formed of non-alkali glass or the like. The moistureproof body 7 is formed of an aluminum ally or the like. The cover part 21 is formed of an aluminum alloy or the like. The incident window 22 is formed of a carbon-fiber-reinforced plastic or the like.

For that reason, as shown in FIG. 8A, the X-ray irradiated toward the X-ray detector 1 penetrates these components without attenuation, and is incident on the semiconductor elements 3aa1, 3b1.

In this case, as shown in FIG. 8B, a shielding plate 8 made of lead or copper or the like is provided on the incident side of the X-ray of the semiconductor elements 3aa1, 3b1, the X-ray dose incident on the semiconductor elements 3aa1, 3b1 can be lowered. However, if the shielding plate 8 is provided, it results in complication of the structure. In order to acquire sufficient X-ray attenuation, a thick metal plate is necessary, and thus it results in increases of the thickness dimension and the weight of the X-ray detector 1. For that reason, there is a fear that the thinning and the weight saving of the X-ray detector 1 cannot be made.

Then, as shown in FIG. 2, when viewing in the incident direction of the X-ray, the semiconductor elements 3aa1, 3b1 are provided on the flexible printed boards 2e1, 2e2 so as to be positioned below the scintillator 5.

As previously described, most of the incident X-ray to the scintillator 5 is converted to the fluorescence. For that reason, the X-ray dose incident on the semiconductor elements 3aa1, 3b1 can be reduced greatly. That is, the X-ray dose of the X-ray incident on the semiconductor elements 3aa1, 3b1 provided on the flexible printed boards 2e1, 2e2 can be suppressed without providing the shielding plate 8. As a result, the thinning and the weight saving of the X-ray detector 1 can be easily made.

In this case, it is favorable to broaden a formation range of the scintillator 5, to dispose connection positions of the circuit board 3 and the connectors 2e1a, 2e2a on a center side of the housing 20, and to make distances between the semiconductor elements 3aa1, 3b1 and the connectors 2e1a, 2e2a as short as possible.

However, it is necessary to prevent the connector 2e1a and the connector 2e2a from overlapping on the circuit board 3. In this case, the connector 2e1a and the connector 2e2a can be shifted vertically, however there is a fear that the X-ray detector 1 cannot be thinned.

For that reason, in a design step of the X-ray detector 1, it is favorable to consider the formation range of the scintillator 5, the connection positions between the circuit board 3 and the connectors 2e1a, 2e2a, dimensions (lengths) of the flexible printed boards 2e1, 2e2, mounting positions of the semiconductor elements 3aa1, 3b1 on the flexible printed boards 2e1, 2e2 or the like.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention. Moreover, above-mentioned embodiments can be combined mutually and can be carried out.

## Claims

1. A radiation detector, comprising:
an array substrate including a plurality of photoelectric conversion elements;
a scintillator provided on the plurality of photoelectric conversion elements, the scintillator converting an incident radiation to a fluorescence;
a circuit board provided on a side of the array substrate opposite to a side on which the scintillator is provided;
a plurality of flexible printed boards electrically connecting a plurality of wirings provided on the array substrate and a plurality of wirings provided on the circuit board; and
when viewing in an incident direction of the radiation, a semiconductor element provided on the plurality of flexible printed boards, the semiconductor element being positioned below the scintillator.

2. The radiation detector according to claim 1, wherein
a plurality of wirings provided on the array substrate are a plurality of control lines or a plurality of data lines.

3. The radiation detector according to claim 2, wherein
the semiconductor element includes a gate driver inputting a control signal to each of the plurality of control lines.

4. The radiation detector according to claim 2, wherein
the semiconductor element includes an amplification/conversion circuit as an integrated circuit, the amplification/conversion circuit processing an image data signal from the plurality of data lines.
